# EUROPEAN PATENT SPECIFICATION

(11) **EP 3 577 954 B1**
(45) Date of publication and mention of the grant of the patent: **22.06.2022**
(21) Application number: 17829710.7
(22) Date of filing: 20.12.2017
(51) Int. Cl.: H04W 48/18, H04W 76/11

(54) **ACCESS TO A COMMUNICATION SYSTEM EMPLOYING NETWORK SLICING BASED ON PRE-CONFIGURED ACCESS CATEGORY**
ZUGRIFF AUF EIN KOMMUNIKATIONSSYSTEM MIT NETZWERK-SLICING AUF DER BASIS EINER VORGEGEBENEN ZUGANGSKATEGORIE
ACCÈS À UN SYSTÈME DE COMMUNICATION EMPLOYANT UN DÉCOUPAGE EN TRANCHES DE RÉSEAU EN FONCTION D'UNE CATÉGORIE D'ACCÈS PRÉCONFIGURÉE

(30) Priority: 03.02.2017 US 201762454693 P
(43) Date of publication of application: 11.12.2019
(73) Proprietor: Telefonaktiebolaget LM Ericsson (PUBL), 164 83 Stockholm (SE)
(72) Inventor: MILDH, Gunnar, SE-192 55 Sollentuna (SE); CENTONZA, Angelo, SE-112 44 Stockholm (SE); HEDMAN, Peter, SE-252 51 Helsingborg (SE); MYHRE, Elena, SE-177 70 Järfälla (SE); SCHLIWA-BERTLING, Paul, SE-590 71 Ljungsbro (SE)
(74) Representative: Ericsson
(86) International application number: PCT/IB2017/058180
(87) International publication number: WO 2018/142200

(56) References cited:
- US-A1- 2016 353 367
- MOTOROLA MOBILITY ET AL: "Solution: PDU Sessions served by different Network Slices", 3GPP DRAFT; S2-161574_SM-NETWORK-SLICING_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FRANCE; 20160411 - 20160415 5 April 2016 (2016-04-05), XP051086558, Retrieved from the Internet: URL:http://www.3gpp.org/ftp/tsg_sa/WG2_Arc h/TSGS2_114_Sophia_Antipolis/Docs/ [retrieved on 2016-04-05]
- NOKIA ET AL: "Slice Selection solution update", 3GPP DRAFT; S2-162982 WAS S2-162717-MDD AND SLICE SELECTION IN CORE AND RAN V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG2, no. Nanjing, P.R. China; 20160523 - 20160527 27 May 2016 (2016-05-27), XP051116482, Retrieved from the Internet: URL:http://www.3gpp.org/ftp/tsg_sa/WG2_Arc h/TSGS2_115_Nanjing_China/Docs/ [retrieved on 2016-05-27]
- ERICSSON: "Signalling aspects of network slicing", 3GPP DRAFT; R2-1701051 SIGNALLING ASPECTS OF NETWORK SLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 3 February 2017 (2017-02-03), XP051223021, Retrieved from the Internet: URL:http://www.3gpp.org/ftp/tsg_ran/WG2_RL 2/TSGR2_97/Docs/ [retrieved on 2017-02-03]
- HUAWEI ET AL: "Slice-based Unified Access Control", 3GPP DRAFT; R2-1710220 SLICE-BASED UNIFIED ACCESS CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 29 September 2017 (2017-09-29), XP051354790, Retrieved from the Internet: URL:http://www.3gpp.org/ftp/tsg_ran/WG2_RL 2/TSGR2_99bis/Docs/ [retrieved on 2017-09-29]

## Description

### TECHNICAL FIELD

The present invention is directed, in general, to the communication systems and, more specifically, to an apparatus and method associated with a user equipment in a communication system employing network slicing.

### BACKGROUND

As part of the evolution of Third Generation Partnership Program ("3GPP") Long Term Evolution ("LTE") communication systems into future generation mobile networks, the concept of network slicing is being developed. Network slicing includes defining, realizing and operating end-to-end logical networks by means of dedicated and/or shared resources in the core network ("CN") and/or the radio access network ("RAN") and associated management system(s).

With respect to introducing the network slicing concept, the 3GPP concluded that the user equipment ("UE") should be able to provide assistance information for the network ("NW") slice selection via radio resource control ("RRC") signaling. The network slice selection is to be understood as selection of the RAN configuration appropriate for a particular slice as well as selection of the CN instance to setup the RAN/CN interface for the UE. This includes defining identifiers on the background of the concept of a network slice. The solution should respect signaling constraints presented in the air interface and avoid imposing an unnecessary burden on the radio signaling.

Motorola Mobility et al, "Solution: PDU Sessions served by different Network Slices," SA WG2 Meeting #114, 3GPP DRAFT S2-161574, 11-15 April 2016, Sophia Antipolis, France, discusses enabling a UE to simultaneously obtain services from one or more specific network slice instances.

Nokia et al, "Slice Selection solution update," SA WG2 Meeting #115, 3GPP DRAFT S2-162717, 23-27 May 2016, Nanjing, P.R. China, proposes a definition and analysis of the concept and need of a multi-dimensional descriptor (MDD).

### SUMMARY

These and other problems are generally solved or circumvented, and technical advantages are generally achieved, by advantageous embodiments of the present invention for an apparatus and method associated with a user equipment in a communication system employing network slicing. The present invention is defined by the claims appended hereto. In one embodiment, an apparatus associated with a user equipment in a communication system employing network slicing is configured to select a pre-configured access category indicating a priority of communication with the communication system and based on a criterion dependent on a network slice. The apparatus is also configured to perform a barring check based on said pre-configured access category. The apparatus is also configured to transmit an access message in accordance with the barring check and a random access procedure with the communication system.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the scope of the invention, provided that they fall within the scope of the appended claims.

### BRIEF DESCRIPTION OF THE DRAWINGS

For a more complete understanding of the present invention, reference is now made to the following descriptions taken in conjunction with the accompanying drawings, in which:
FIGUREs 1 to 3 illustrate diagrams of embodiments of a communication system, and portions thereof;
FIGURE 4 illustrates a system level diagram of an embodiment a communication system;
FIGURE 5 illustrates a block diagram of an embodiment of a management system architecture for a communication system;
FIGURE 6 illustrates a system level diagram of an embodiment a communication system;
FIGURE 7 illustrates a schematic view of an embodiment of a communication system including a communication network connected to a host computer;
FIGURE 8 illustrates a block diagram of an embodiment of a communication system;
FIGURE 9 illustrates a system level diagram of an embodiment of a communication system demonstrating network slicing;
FIGUREs 10 to 12 illustrate signaling diagrams of embodiments of operating communication systems; and
FIGUREs 13 and 14 illustrate flow diagrams of embodiments of methods of operating a communication system.

Corresponding numerals and symbols in the different figures generally refer to corresponding parts unless otherwise indicated, and may not be redescribed in the interest of brevity after the first instance. The FIGUREs are drawn to illustrate the relevant aspects of exemplary embodiments.

### DETAILED DESCRIPTION

The making and using of the present exemplary embodiments are discussed in detail below. It should be appreciated, however, that the embodiments provide many applicable inventive concepts that can be embodied in a wide variety of specific contexts. The specific embodiments discussed are merely illustrative of specific ways to make and use the systems, subsystems, and modules for system and method for performing network slicing in a communication system. While the principles will be described in the environment of a Third Generation Partnership Program ("3GPP") Long Term Evolution ("LTE") communication system, any environment such as a Wi-Fi wireless communication system is well within the broad scope of the present disclosure.

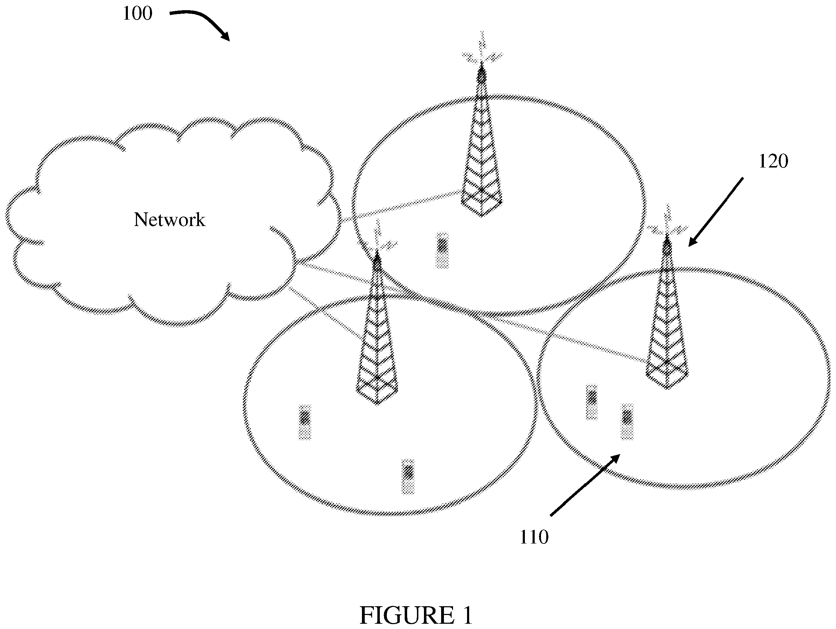

Referring initially to FIGUREs 1 to 3, illustrated are diagrams of embodiments of a communication system 100, and portions thereof. As shown in FIGURE 1, the communication system 100 includes one or more instances of wireless communication devices (one of which is designated 110, and also referred to as user equipment ("UE")).

The wireless communication device 110 may be any device that has an addressable interface *(e.g.,* an Internet protocol ("IP") address, a Bluetooth identifier ("ID"), a near-field communication ("NFC") ID, *etc.*)*,* a cell radio network temporary identifier ("C-RNTI"), and/or is intended for accessing services via an access network and configured to communicate over the access network via the addressable interface. For instance, the wireless communication device 110 may be, but is not limited to: mobile phone, smart phone, sensor device, meter, vehicle, household appliance, medical appliance, media player, camera, or any type of consumer electronic, for instance, but not limited to, television, radio, lighting arrangement, tablet computer, laptop, or PC. The wireless communication device 110 may be a portable, pocket-storable, hand-held, computer-comprised, or vehicle-mounted mobile device, enabled to communicate voice and/or data, via a wireless or wireline connection. A wireless communication device 110 may have functionality for performing monitoring, controlling, measuring, recording, *etc.,* that can be embedded in and/or controlled/monitored by a central processing unit ("CPU"), microprocessor, ASIC, or the like, and configured for connection to a network such as a local ad-hoc network or the Internet. A wireless communication device 110 may have a passive communication interface, such as a quick response (Q) code, a radiofrequency identification ("RFID") tag, an NFC tag, or the like, or an active communication interface, such as a modem, a transceiver, a transmitter-receiver, or the like.

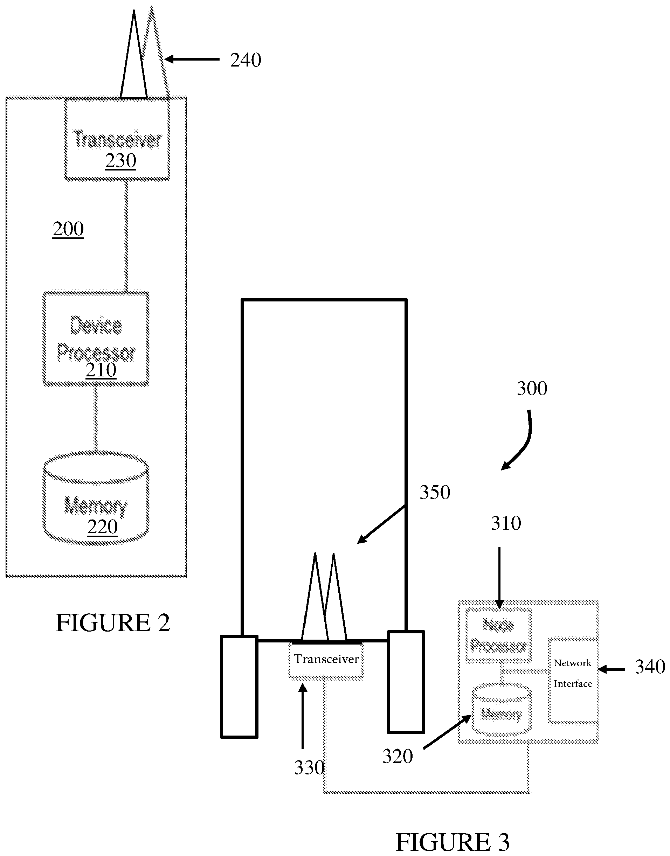

The communication system 100 also includes one or more radio access nodes (one of which is designated 120) such as eNodeBs, gNBs or other base stations capable of communicating with the wireless communication devices 110 along with any additional elements suitable to support communication between wireless communication devices 110 or between a wireless communication device 110 and another communication device (such as a landline telephone). Although the illustrated wireless communication devices 110 may represent communication devices that include any suitable combination of hardware and/or software, the wireless communication devices 110 may, in particular embodiments, represent devices such as the example wireless communication device 200 illustrated in greater detail by FIGURE 2. Similarly, although the illustrated radio access node 120 may represent network nodes that include any suitable combination of hardware and/or software, these nodes may, in particular embodiments, represent devices such as the example radio access node 300 illustrated in greater detail by FIGURE 3.

As shown in FIGURE 2, the example wireless communication device 200 includes a processor (or processing circuitry) 210, a memory 220, a transceiver 230, and antennas 240. In particular embodiments, some or all of the functionality described above as being provided by machine type communication ("MTC") and machine-to-machine ("M2M") devices, and/or any other types of wireless communication devices may be provided by the device processor executing instructions stored on a computer-readable medium, such as the memory shown in FIGURE 2. Alternative embodiments of the wireless communication device 200 may include additional components beyond those shown in FIGURE 2 that may be responsible for providing certain aspects of the device's functionality, including any of the functionality described above and/or any functionality necessary to support the solution described herein.

As shown in FIGURE 3, the example radio access node 300 includes a processor (or processing circuitry) 310, a memory 320, a transceiver 330, a network interface 340 and antennas 350. In particular embodiments, some or all of the functionality described herein may be provided by a base station, a node B, an enhanced node B, a base station controller, a radio network controller, a relay station and/or any other type of network node may be provided by the node processor executing instructions stored on a computer-readable medium, such as the memory shown in FIGURE 3. Alternative embodiments of the radio access node 300 may include additional components responsible for providing additional functionality, including any of the functionality identified above and/or any functionality necessary to support the solution described herein.

The processors, which may be implemented with one or a plurality of processing devices, performs functions associated with its operation including, without limitation, precoding of antenna gain/phase parameters, encoding and decoding of individual bits forming a communication message, formatting of information and overall control of a respective communication device. Exemplary functions related to management of communication resources include, without limitation, hardware installation, traffic management, performance data analysis, configuration management, security, billing and the like. The processors may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The memories may be one or more memories and of any type suitable to the local application environment, and may be implemented using any suitable volatile or nonvolatile data storage technology such as a semiconductor-based memory device, a magnetic memory device and system, an optical memory device and system, fixed memory and removable memory. The programs stored in the memories may include program instructions or computer program code that, when executed by an associated processor, enable the respective communication device to perform its intended tasks. Of course, the memories may form a data buffer for data transmitted to and from the same. Exemplary embodiments of the system, subsystems, and modules as described herein may be implemented, at least in part, by computer software executable by processors, or by hardware, or by combinations thereof.

The transceivers modulate information onto a carrier waveform for transmission by the respective communication device via the respective antenna(s) to another communication device. The respective transceiver demodulates information received via the antenna(s) for further processing by other communication devices. The transceiver is capable of supporting duplex operation for the respective communication device. The network interface performs similar functions as the transceiver communicating with a core network.

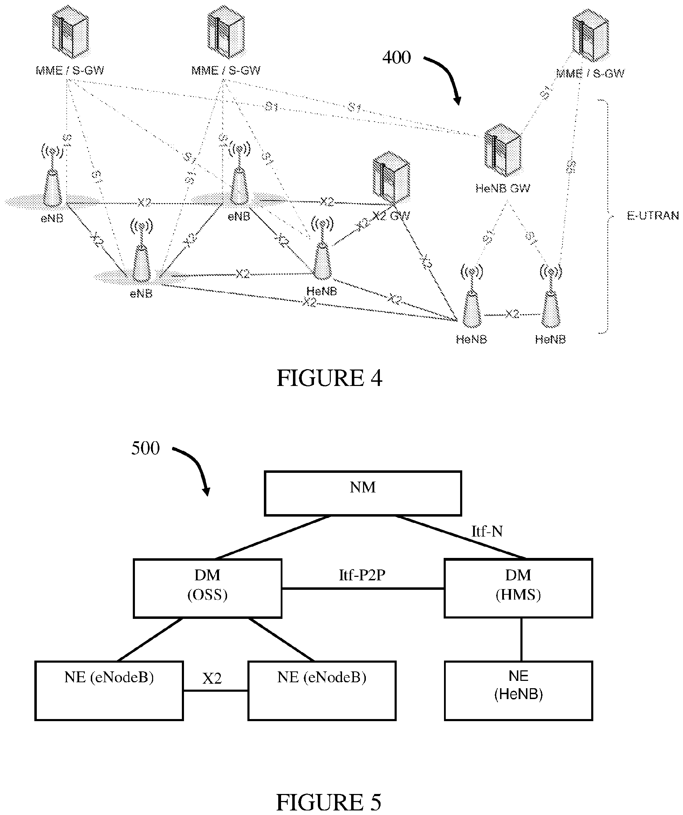

Turning now to FIGURE 4, illustrated is a system level diagram of an embodiment a communication system 400. The communication system 400 shows logical interfaces between base stations (designated "eNB," also referred to as "eNodeB"), home base stations (designated "HeNB"), home base station gateways (designated "HeNB GW"), X2 gateways (designated "X2 GW") and mobility management entities ("MME")/serving gateways ("S-GW") (designated "MME/S-GW"). The 3GPP is currently working on standardization of Release 14 of the LTE concept. The architecture of the LTE system includes radio access nodes (eNBs, HeNBs, HeNB GW) and evolved packet core nodes (MME/S-GW). As illustrated, an S1 interface connects eNBs/HeNBs to the MME/S-GW and HeNBs to the HeNB GW, while an X2 interface connects peer eNBs/HeNBs, optionally via an X2 GW.

Turning now to FIGURE 5, illustrated is a block diagram of an embodiment of a management system architecture for a communication system 500. The node elements (designated "NE"), also referred to as base stations (eNodeB), are managed by a domain manager (designated "DM"), also referred to as the operation and support system ("OSS"). The domain manager may further be managed by a network manager (designated "NM"). Two node elements are interfaced by X2, whereas the interface between two domain managers is referred to as Itf-P2P. The management system may configure the network elements, as well as receive observations associated to features in the network elements. For example, the domain manager observes and configures the network elements, while the network manager observes and configures the domain manager, as well as the network element via the domain manager. Through the configuration of the domain manager, the network manager and related interfaces that function over the X2 and S1 interfaces can be carried out in a coordinated way throughout the radio access network, eventually involving the core network including the MME and S-GWs.

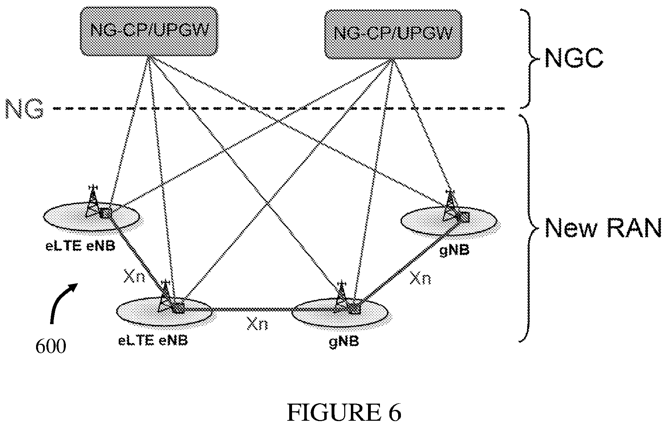

Turning now to FIGURE 6, illustrated is a system level diagram of an embodiment a communication system 600. The communication system 600 represents a 5G radio access network ("RAN") architecture. The 5G RAN architecture should also include counterparts to the S1, X2 and Uu interfaces, and the new radio access technology ("RAT") should be integrated with the LTE radio interface at the RAN level in a similar fashion as the LTE dual connectivity is defined. The overall principles as described herein will operate regardless of the LTE architecture and regardless of a new architecture based on an evolution of the S1 interface or on a different interface based on similar architectural principles as S1.

The communication system 600 includes a radio access network with new radio access nodes (designated "gNB") and LTE radio access nodes (designated "eLTE eNB," again also referred to as "eNodeB") connected by Xn interfaces. The communication system 600 also includes a next generation core ("NGC") including next generation-control plane ("NG-CP")/user plane gateways ("UPGW") (designated "NG-CP/UPGW"). For a better understanding of 5G communication systems, see "Wireless Technology Evolution Towards 5G: 3GPP Release 13 to Release 15 and Beyond," published by 5G Americas, February 2017, which is incorporated herein by reference.

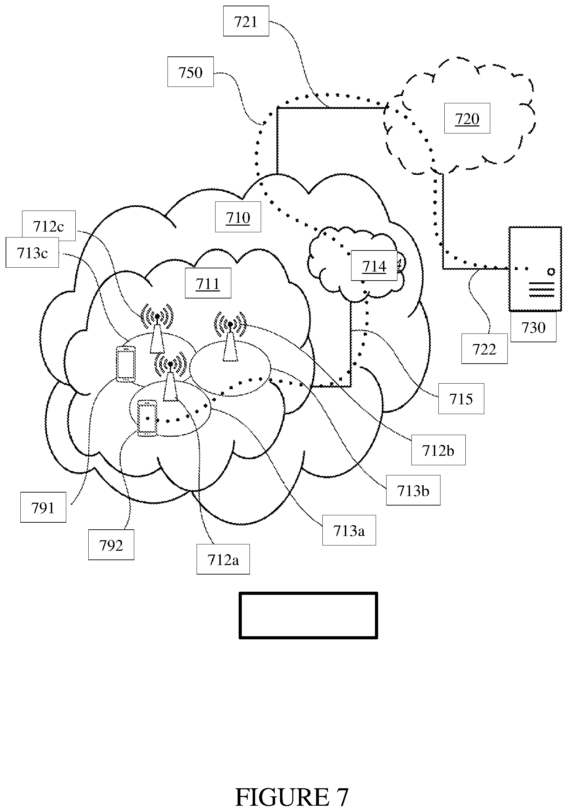

Turning now to FIGURE 7, illustrated is a schematic view of an embodiment of a communication system including a communication network *(e.g.,* a 3GPP-type cellular network) 710 connected to a host computer. The communication network 710 includes an access network 711, such as a radio access network, and a core network 714. The access network 711 includes a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first user equipment ("UE") 791 located in coverage area 713c is configured to wirelessly connect to, or be paged by, the corresponding base station 712c. A second user equipment 792 in coverage area 713a is wirelessly connectable to the corresponding base station 712a. While a plurality of user equipment 791, 792 are illustrated in this example, the disclosed embodiments are equally applicable to a situation where a sole user equipment is in the coverage area or where a sole user equipment is connecting to the corresponding base station 712.

The communication network 710 is itself connected to the host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. The connections 721, 722 between the communication network 710 and the host computer 730 may extend directly from the core network 714 to the host computer 730 or may go via an optional intermediate network 720. The intermediate network 720 may be one of, or a combination of more than one of, a public, private or hosted network; the intermediate network 720, if any, may be a backbone network or the Internet; in particular, the intermediate network 720 may include two or more sub-networks (not shown).

The communication system of FIGURE 7 as a whole enables connectivity between one of the connected user equipment 791, 792 and the host computer 730. The connectivity may be described as an over-the-top ("OTT") connection 750. The host computer 730 and the connected user equipment 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, a base station 712 may not or need not be informed about the past routing of an incoming downlink communication with data originating from a host computer 730 to be forwarded *(e.g.,* handed over) to a connected user equipment 791. Similarly, the base station 712 need not be aware of the future routing of an outgoing uplink communication originating from the user equipment 791 towards the host computer 730.

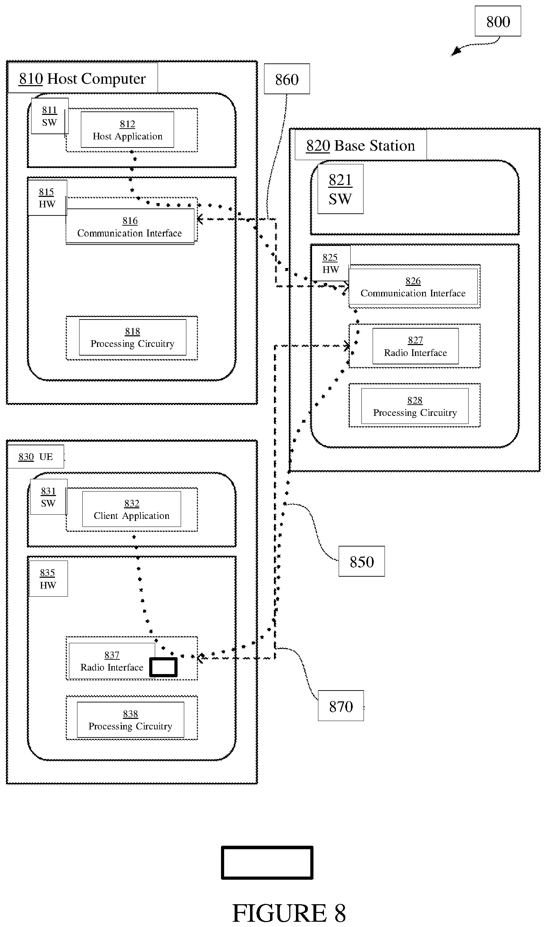

Turning now to FIGURE 8, illustrated is a block diagram of an embodiment of a communication system 800. In the communication system 800, a host computer 810 includes hardware 815 including a communication interface 816 configured to set up and maintain a wired or wireless connection with an interface of a different communication device of the communication system 800. The host computer 810 further includes processing circuitry (a processor) 818, which may have storage and/or processing capabilities. In particular, the processing circuitry 818 may include one or more programmable processors, application-specific integrated circuits, field programmable gate arrays or combinations of these (not shown) adapted to execute instructions. The host computer 810 further includes software 811, which is stored in or accessible by the host computer 810 and executable by the processing circuitry 818. The software 811 includes a host application 812. The host application 812 may be operable to provide a service to a remote user, such as a user equipment ("UE") 830 connecting via an OTT connection 850 terminating at the user equipment 830 and the host computer 810. In providing the service to the remote user, the host application 812 may provide user data which is transmitted using the OTT connection 850.

The communication system 800 further includes a base station 820 provided in a communication system and including hardware 825 enabling it to communicate with the host computer 810 and with the user equipment 830. The hardware 825 may include a communication interface 826 for setting up and maintaining a wired or wireless connection with an interface of a different communication device of the communication system 800, as well as a radio interface 827 for setting up and maintaining at least a wireless connection 870 with a user equipment 830 located in a coverage area (not shown in FIGURE 8) served by the base station 820. The communication interface 826 may be configured to facilitate a connection 860 to the host computer 810. The connection 860 may be direct or it may pass through a core network (not shown in FIGURE 8) of the communication system and/or through one or more intermediate networks outside the communication system. In the embodiment shown, the hardware 825 of the base station 820 further includes processing circuitry (a processor) 828, which may include one or more programmable processors, application-specific integrated circuits, field programmable gate arrays or combinations of these (not shown) adapted to execute instructions. The base station 820 further has software 821 stored internally or accessible via an external connection.

The communication system 800 further includes the user equipment 830. The user equipment 830 includes hardware 835 having a radio interface 837 configured to set up and maintain a wireless connection 870 with a base station 820 serving a coverage area in which the user equipment 830 is currently located. The hardware 835 of the user equipment 830 further includes processing circuitry (a processor) 838, which may comprise one or more programmable processors, application-specific integrated circuits, field programmable gate arrays or combinations of these (not shown) adapted to execute instructions. The user equipment 830 further includes software 831, which is stored in or accessible by the user equipment 830 and executable by the processing circuitry 838. The software 831 includes a client application 832. The client application 832 may be operable to provide a service to a human or non-human user via the user equipment 830, with the support of the host computer 810. In the host computer 810, an executing host application 812 may communicate with the executing client application 832 via the OTT connection 850 terminating at the user equipment 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, base station 820 and user equipment 830 illustrated in FIGURE 8 may be identical to the host computer 730, one of the base stations 712a, 712b, 712c and one of the user equipment 791, 792 of FIGURE 7, respectively. This is to say, the inner workings of these entities may be as shown in FIGURE 8 and independently, the surrounding network topology may be that of FIGURE 7.

In FIGURE 8, the OTT connection 850 has been drawn abstractly to illustrate the communication between the host computer 810 and the use equipment 830 via the base station 820, without explicit reference to any intermediary devices and the precise routing of messages via these devices. Network infrastructure may determine the routing, which it may be configured to hide from the user equipment 830 or from the service provider operating the host computer 810, or both. While the OTT connection 850 is active, the network infrastructure may further take decisions by which it dynamically changes the routing *(e.g.,* on the basis of load balancing consideration or reconfiguration of the network).

A measurement procedure may be provided for the purpose of monitoring data rate, latency and other factors on which the one or more embodiments improve. There may further be an optional network functionality for reconfiguring the OTT connection 850 between the host computer 810 and user equipment 830, in response to variations in the measurement results. The measurement procedure and/or the network functionality for reconfiguring the OTT connection 850 may be implemented in the software 811 of the host computer 810 or in the software 831 of the user equipment 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which software 811, 831 may compute or estimate the monitored quantities. The reconfiguring of the OTT connection 850 may include message format, retransmission settings, preferred routing *etc.;* the reconfiguring need not affect the base station 820, and it may be unknown or imperceptible to the base station 820. Such procedures and functionalities may be known and practiced in the art. In certain embodiments, measurements may involve proprietary user equipment signaling facilitating the host computer's 810 measurements of throughput, propagation times, latency and the like. The measurements may be implemented in that the software 811, 831 causes messages to be transmitted, in particular empty or 'dummy' messages, using the OTT connection 850 while it monitors propagation times, errors, *etc.*

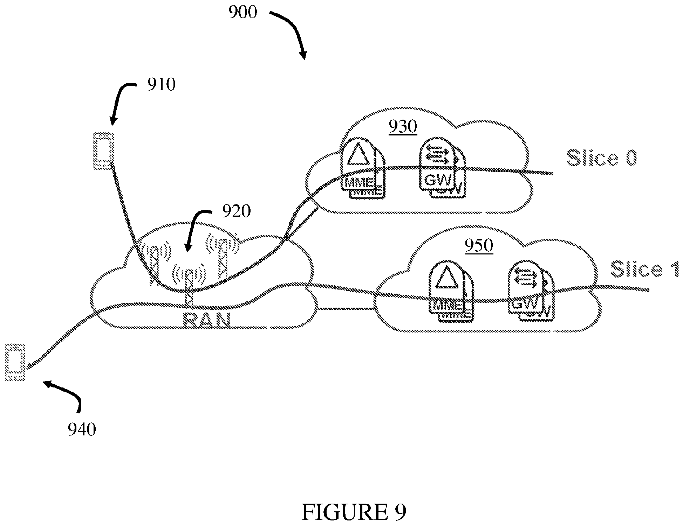

Turning now to FIGURE 9, illustrated is a system level diagram of an embodiment of a communication system 900 demonstrating network slicing. Network slicing creates logically separated partitions of the network, addressing different business purposes. These "network slices" are logically separated to a degree that they can be managed as networks of their own. The network slicing concept may apply to different radio access technologies ("RAT") such as LTE and new 5G RAT (also referred to as new radio ("NR")). A driver for introducing network slicing is business expansion that improves the cellular operator's ability to serve other industries, for instance, by offering connectivity services with different network characteristics (e.g., performance, security, robustness and complexity).

A current working assumption is that there will be one shared RAN infrastructure that will connect to several core network instances (with one or more common control network functions ("CCNF") interfacing the RAN, plus additional core network functions that may be slice-specific). As the core network functions are being virtualized, the operator may instantiate a new core network, or part thereof, when a new slice should be supported. This architecture is shown in FIGURE 9. A network slice can be a mobile broadband network slice (slice 0) employable by a user equipment 910 traversing a radio access network including a base station (one of which is designated 920) to a core network instance 930 (including a MME and GW). A network slice can be a machine type communication network slice (slice 1) employable by a user equipment 940 traversing the radio access network including a base station (one of which is designated 920) to a core network instance 950 (including a MME and GW).

With respect to slicing, it is important to determine how to slice related information for routing messages from the UE via RAN to the core network addressing a particular slice as well as to select the appropriate RAN configuration between the network entities and the UE. Additionally, the information provided in the access stratum ("AS,"e.g., an RRC protocol) and the non-access stratum ("NAS") can be different.

Support of network slicing relies on the principle that traffic for different slices is handled by different protocol data unit ("PDU") sessions. The network can realize the different network slices by scheduling and also by providing different L1/L2 configurations. The UE should be able to provide assistance information for network slice selection in an RRC message, if it has been provided by NAS. It is ultimately the CN that verifies the rights of the UE to access a certain network slice and communicates the outcome to the RAN in an initial context setup phase. It is possible to provide a different physical random access channel ("PRACH"), access barring and congestion control information for different slices.

Prior to this phase, however, there are other considerations to be made on the importance of being network slice-aware at RAN level. The RAN should support a differentiated handling of traffic for different network slices that have been pre-configured. The manner that the RAN supports the slice enabling in terms of RAN functions *(i.e.,* the set of network functions that manage each network slice) is implementation dependent. The RAN should support the selection of the RAN part of the network slice, by one or more slice identifiers ("IDs") provided by the UE or the CN that identifies one or more of the pre-configured network slices in the public land mobile network ("PLMN"). An accepted network slice selection assistance information ("NSSAI") is sent by CN to UE and RAN after network slice selection. The RAN should support policy enforcement between slices as per service level agreements. It should be possible for a single RAN node to support multiple slices. The RAN should be free to apply the appropriate radio resource management ("RRM") policy for the service level agreement to each supported network slice. The RAN shall support quality of service ("QoS") differentiation within a network slice.

For initial attach, the UE may provide one or more network slice ID(s). If available, the RAN uses the network slice ID(s) for routing the initial non access stratum ("NAS") to a next generation core control plane ("NGC CP") function. If the UE does not provide any network slice ID(s), the RAN sends the NAS signalling to a default NGC CP function. For subsequent accesses, the UE provides a temporary ("Temp") ID, which is assigned to the UE by the NGC, to enable the RAN to route the NAS message to the appropriate NGC CP function as long as the Temp ID is valid (the RAN is aware of and can reach the NGC CP function which is associated with the Temp ID). Otherwise, the methods for initial attach applies.

The RAN may support resource isolation between network slices. The RAN resource isolation may be achieved by means of RRM policies and protection mechanisms that should avoid any shortage of shared resources if one network slice breaks the service level agreement for another network slice. It is possible to fully dedicate RAN resources to a certain network slice. Some network slices may be available only in part of the network. Awareness in a radio access node (gNB) of the network slices supported in the cells of its neighboring radio access nodes (gNBs) may be beneficial for inter-frequency mobility in connected mode. The RAN and the CN are responsible for handling a service request for a network slice. Admission or rejection of access to a network slice may depend on factors such as support for the network slice, availability of resources, support for the requested service by other network slices. The neighbor radio access nodes may exchange network slice availability on the interface connecting two nodes *(e.g.,* Xn interface between gNBs). The CN can provide the RAN a mobility restriction list including nodes that support the network slices for the UE. The network slices supported at a source radio access node may be mapped, if possible, to other network slices at a target radio access node.

When network slices are not available through the network, it is possible to remap a target radio access node to accommodate the network slice. The network slice can be remapped during connection handling and mobility signaling by the CN when there is signalling interaction between RAN and CN and performance is not impacted. The remapping can be performed by the RAN as an action following prior negotiation with the CN during connection setup, and/or by the RAN autonomously, when involving the CN would not be a practical solution and if prior negotiation did not take place.

For example, during initial context setup over NG-C, the CN can give to the RAN one or more network slice IDs, which uniquely represent the network slice/s the UE is allowed to connect to, and these network slice IDs may be different from the ones communicated by the UE to the RAN during RRC connection establishment, indicating that a remapping has taken place in the CN. Alternatively, the CN can provide the RAN with a number of network slices that are allowed to be used as replacement of a particular network slice when such network slice is not available for any reason. The RAN can then remap UE connections to such alternate network slices when needed during any subsequent signalling, for example, during RAN-internal handovers, dual connectivity and/or due to internal radio resource management-related reasons in the RAN. This would facilitate remapping procedures that do not involve CN signaling.

Of course, it is possible that an alternative network slice is unavailable to the RAN, and in that case the RAN can autonomously remap the provided network slice to a default network slice. It would be desirable that the CN indicate to the RAN if such autonomous remapping is allowed; otherwise the RAN may reject a PDU session corresponding to an unavailable network slice.

The RAN should select the correct core network instance by means of a NAS node selection function ("NNSF") or similar function, but that is not the only motivation for receiving slice-related assistance from the UE during the RRC connection establishment. The RAN can allocate resources and operate according to some admission criteria already at the RRC connection establishment. Until a full UE context and bearers are established later with the initial context setup procedure, an RRC context should be created, implying allocation of memory and processing resources. The more the RAN knows about the network slice(s) that the UE is attempting to access, the more it can tailor its policies according to its network slicing configuration. Thus, awareness of the network slice(s) that the UE is attempting to access is not just needed to select the correct core network instance, but is also beneficial to enable provisional network slicing policies in the RAN prior to the initial context setup procedure.

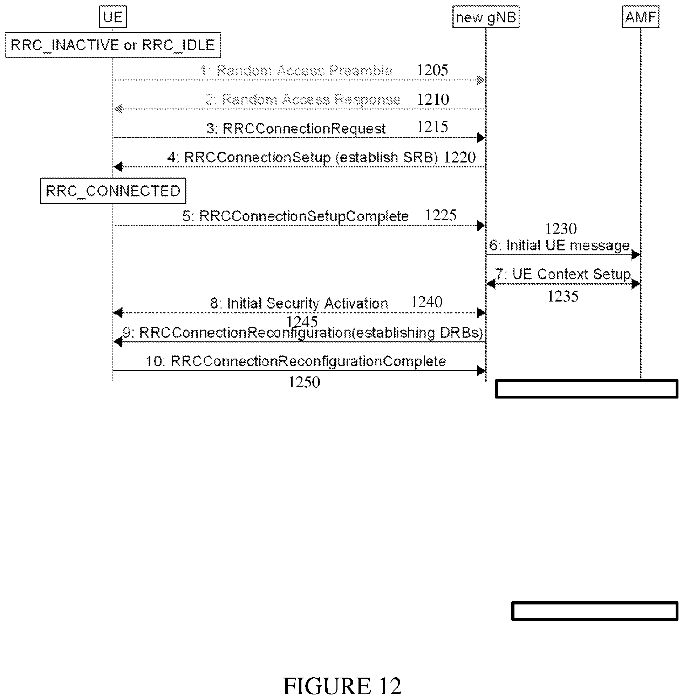

In an embodiment, the RAN receives network slice(s)-related information from the UE to enable provisional early policies prior to the initial context setup procedure. Although it is important for the RAN to know as soon as possible which network slice(s) the UE is interested in, there may be constraints presented by access stratum RRC signaling and, in particular, early connection establishment messages (*e.g*., an RRC connection request message, message 3 in FIGURE 12). The radio performance and signaling robustness should not be jeopardized.

A single- network slice selection assistance information ("S-NSSAI" identifying a network slice) could be up to 32 bits long, meaning an NSSAI (a collection of identifiers) would result in 32 bits X the number of concerned network slices for a specific UE. The UE may store configured and/or accepted NSSAI per public land mobile network ("PLMN"), which may include standard values or PLMN specific values.

If the size constraints in the relevant RRC messages (for instance, for an LTE network) are considered, the size of the message 3 is limited and the message may be full (in the LTE) just by including the necessary information. The robustness, coverage and delay considerations dictate that the message 3 cannot grow indefinitely, *i.e.,* early connection establishment will be a phase where it would be preferable to adopt a shorter message. The message 5 is much less constrained in size, but it does not necessarily mean similar efficiency considerations as for the message 3 are not important and should be disregarded. Thus, it may be advantageous that limited network slicing-related information can be carried in the message 3 *(i.e.,* not an NSSAI and not a full S-NSSAI either). It is also possible that, although fewer constraints are present for the message 5, the RRC signaling should still be designed in an efficient way for the message 5.

Hence, there is a trade off between conveying network slice information as early as possible and the need to design the RRC protocol in a robust and well performing way with consideration to radio aspects. Moreover, it should be noted that given a network slice is essentially a business-driven concept, it is not easy to predict how many network slices may be deployed in the network, and hence the specification of the system should not be unnecessarily rigid. Also, the case when the UE is performing an attach to the network *(i.e.,* it is not previously known to it) should be distinguished from the case when the UE is executing a service request *(i.e.,* it is already registered and known to the network).

When information is not needed to assist non-access stratum node selection function ("NNSF") and core network instance selection includes at attach, a message 3 containing a (short) default or pre-configured access category indicating the 'importance' of the establishing the connection (akin to a cause value), not explicitly representing a network slice, but possibly configured according to criteria depending on network slicing. For cases where the UE is already attached, the message 3 is enhanced by a new information element ("IE"), also similar to a cause value *(i.e.,* a short IE), but indicating a generic access category set by the core network over NAS as a function of {network slice, cause value, QoS, *e*tc*.*}*.* The access category to use will be based on the network slice, service and/or public land mobile network ("PLMN") the UE is accessing and a mapping rule configured in the UE by the network (RAN and CN) using dedicated signaling (*e.g*., RRC or NAS). It should be noted that this procedure may avoid sending potentially sensitive information like a network slice identifier over the air interface.

In another embodiment, using information that is derived from network slicing considerations (and other factors), but not explicitly describing a network slice identifier can be adopted in the area of access control. In yet another embodiment regarding the message 5, enough information is needed to enable routing to the correct CN instance. At attach, the message 5 may contain either the 'slice type' part of an initial S-NSSAI or, if feasible, one full S-NSSAI; the feasibility depends also on security concerns as stated above, but in any case, an entire NSSAI may not be needed. For cases where the UE is already attached, it can be noted that the system architecture evolution ("SAE")-temporary mobile subscriber identity ("S-TMSI," a temporary NAS layer UE identifier) in the message 3 should be sufficient if the (equivalent of) mobility management entity code ("MMEC") remains unique in a base station (gNB).

Following the signaling above, it is assumed that the CN will indicate the relevant (and verified/accepted) S-NSSAI(s)/NSSAI per PDU session during the initial context setup procedure (and subsequent signaling) and the RAN will be able to execute (non-provisional) network slicing policies based on such information. Thus, the message 3 may contain a default/pre-configured access category (network slice-dependent), and/or a CN-provided access category *(e.g.,* a NAS-provided access category, also network slice-dependent) depending on whether the UE is already attached to the network or not. This information should enable the RAN to apply provisional policies. The message 5 may contain a complete S-NSSAI (or equivalent identifier), if feasible from security point of view, but typically not an entire NSSAI, depending on whether the UE is already attached to the network or not; the acceptable length of an identifier should fit within the message 5 constraints. This identifier should enable the RAN to select the CN instance. When the UE is already attached to the network, S-TMSI is used to perform routing to the correct CN instance, assuming that MMEC remains unique in a gNB.

In yet another embodiment, related to the scenario when the UE's subscription allows multiple network slices to be accessed simultaneously. During NAS signaling between the UE and the access and mobility function ("AMF," *e.g*., registration procedure), the AMF (or slice selection function ("SSF")) provides the UE with information which S-NSSAIs are "standalone"" and which can be accessed together, *e.g.,* in separate NSSAI lists or within one NSSAI list with some additional marking to the UE, *e.g.,* in the registration accept. The UE uses the information to know which S-NSSAI to provide to the RAN/access node ("AN") as well as to understand when separate network connections are required *(e.g.,* the UE may need to deregister and re-register using another group of S-NSSAIs, as these group of S-NSSAIs cannot be used with the same registration/AMF). In yet another embodiment, the 5GC AMF marks (*e.g*., first in the NSSAI list or other pointer) in each NSSAI list the S-NSSAI used for routing, and the UE will use that S-NSSAI in RRC message 5.

Thus, for connection resume (in general whenever the UE attempts to re-establish an RRC connection), the UE should as early as possible provide an indication as to the importance of the access attempt, and such indication may be slice-aware, depending on whether the UE is registered and the CN had the opportunity to convey a proper access category. On the other hand, it appears there is little need to convey the full NSSAI in RAN signaling, neither in RRC or internal RAN signaling, as RAN identifies a single network slice per PDU session (S-NSSAI), while the NSSAI is a collection of identifiers.

When it comes to the radio interface, different pieces of information (that may be set based upon network slicing information) should be specified in the RRC signalling depending on size constraints, whether the UE is registered with the network or not, and other considerations. Such information may not be embodied in an NSSAI (especially if the length indeed becomes in the order of 32 bits times the number of slices). Also, the concept that corresponds to the slice identifier ("ID," an identifier that points at a single network slice) may be the S-NSSAI and that if RAN receives an S-NSSAI from the UE, the RAN should be able to route the signalling to the proper CN instance.

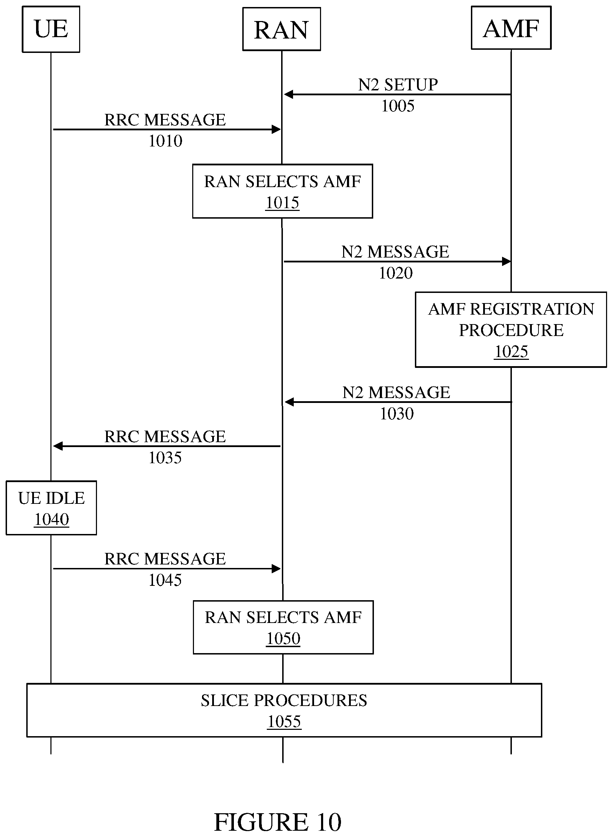

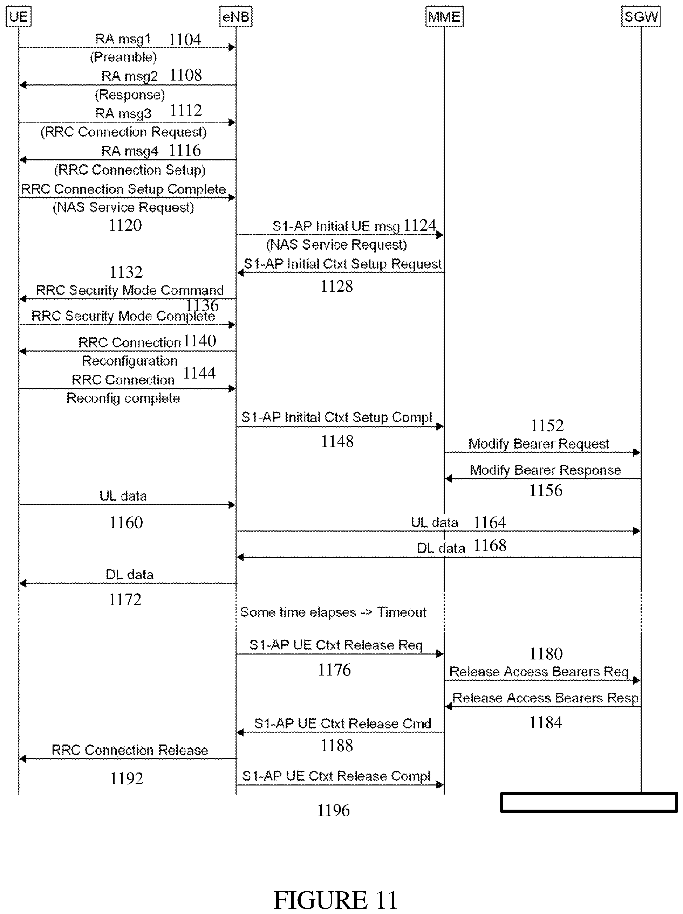

Turning now to FIGUREs 10 to 12, illustrated are signaling diagrams of embodiments of operating a communication system. FIGURE 10 illustrates signaling between a user equipment (designated "UE"), radio access network (designated "RAN") and an access and mobility function (designated "AMF," part of the core network). FIGURE 11 illustrates signaling between a user equipment (designated "UE"), radio access node such as a base station (designated "eNB"), and a core network including a mobility management entity ("MME") and serving gateway (designated "SGW") for an LTE connection setup procedure. FIGURE 12 illustrates signaling between a user equipment (designated "UE"), radio access node such as a base station (designated "gNB") and an access and mobility function (designated "AMF," part of the core network) for a new radio ("NR") connection setup procedure.

Beginning with FIGURE 10, the AMF provides a N2 setup message 1005 to the RAN providing which S-NSSAIs that the AMF supports and which S-NSSAIs are used for routing. The UE provides an RRC message 1010 to the RAN including a registration request and standard requested NSSAI. The RAN then selects 1015 the AMF based on the NSSAI or default NSSAI (for PLMN in case of no NSSAI). The RAN provides an N2 message 1020 to the AMF. The AMF proceeds with a registration procedure 1025 including security, subscription check and reroute (if needed) and assigns an acceptable NSSAI (list of S-NSSAIs). The list of S-NSSAIs is marked with which S-NSSAI is used for routing, and which S-NSSAIs are grouped together.

The AMF provides a N2 message (NAS message) 1030 to the RAN, which provides a RRC message (NAS message) 1035 to the UE. At this point, the UE goes idle 1040. The UE provides an RRC message 1045 to the RAN including a registration request and an S-NSSAI. The RAN then selects 1050 the AMF based on the S-NSSAI. The slice procedures 1055 are conducted via PDU session specific procedures using the S-NSSAI, which can map to a network slice.

Turning now to FIGURE 11, the UE provides a random access message (RA msg 1) 1104 to the eNB including a random access channel ("RACH") preamble and an identity thereof. The eNB provides a random access response (RA msg 2) 1108 to the UE including an uplink resource grant for the UE. The UE provides a RRC connection request (RA msg 3) 1112 to the eNB including a connection establishment cause and an identity thereof. The eNB provides a RRC connection setup message (RA msg 4) 1116 to the UE including radio bearers based on connection establishment cause. The UE provides a RRC connection setup complete message (RA msg 5) 1120 to the eNB including a NAS service request.

The eNB provides a SI-access point ("AP") initial UE message 1124 to the MME including a NAS service request, to which the MME responds with a S1-AP initial Ctxt setup message 1128. The eNB provides a RRC security mode command 1132 to the UE, to which the UE responds with a RRC security mode complete message 1136.. The eNB provides a RRC connection reconfiguration message 1140 to the UE, to which the UE responds with a RRC connection reconfiguration complete message 1144. The eNB thereafter provides a S1-AP initial Ctxt setup complete message 1148 to the MME.

The MME responds by providing a modify bearer request 1152 to the SGW, to which the SGW replies by providing a modify bearer response 1156. The UE then sends uplink ("UL") data 1160 to the eNB, which forwards the UL data 1164 to the SGW. The SGW sends downlink ("DL") data 1168 to the eNB, which forwards the DL data 1172 to the UE.

After time elapses, the eNB provides a S1-AP UE Ctxt release request 1176 to the MME. The MME responds by providing a release access bearer request 1180 to the SGW, to which the SGW replies by providing a release access bearer response 1184. The MME provides a S1-AP UE Ctxt release command 1188 to the eNB, which provides a RRC connection release message 1192 to the UE. The eNB provides a S1-AP UE Ctxt release complete command 1196 to the MME.

Turning now to FIGURE 12, the UE in a RRC_inactive or RRC_idle mode provides a random access message (RA msg 1) 1205 to the gNB including a random access channel ("RACH") preamble and an identity thereof. The gNB provides a random access response (RA msg 2) 1210 to the UE including an uplink resource grant for the UE. The UE provides a RRC connection request (msg 3) 1215 to the gNB including a connection establishment cause and an identity thereof. The gNB provides a RRC connection setup message (msg 4) 1220 to the UE including radio bearers based on connection establishment cause. The UE is now in an RRC_connected mode and provides a RRC connection setup complete message (msg 5) 1225 to the gNB.

The gNB provides an initial UE message 1230 to the AMF, which responds with a UE context setup message 1235. The gNB and UE exchange initial security activation messages 1240. The gNB provides a RRC connection reconfiguration message 1245 to the UE (establishing DRBs), which responds with a RRC connection reconfiguration complete message 1250.

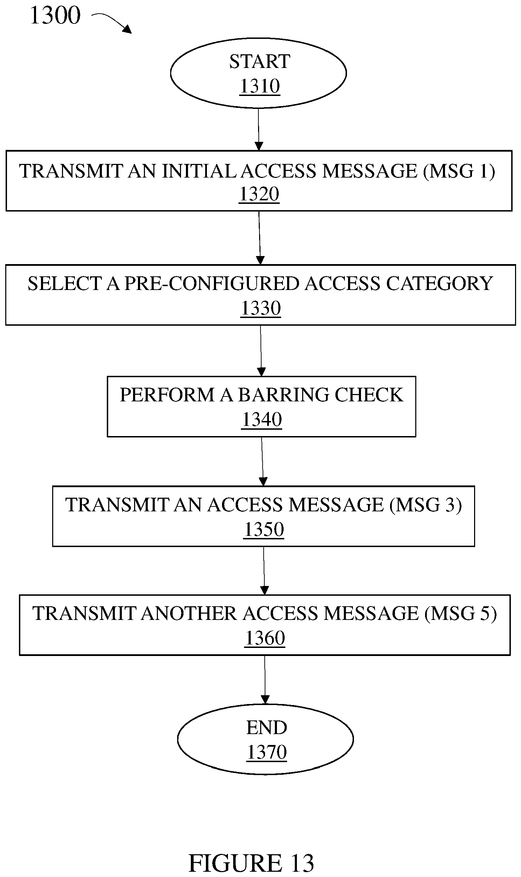

Turning now to FIGURE 13, illustrated is a flow diagram of an embodiment of a method 1300 of operating a communication system. The method 1300 is operable on a user equipment such as the user equipment (110, 200, 910, 920) in the communication systems (100, 900) of FIGUREs 1 and 9 employing network slicing. The method begins at a start step or module 1310. At a step or module 1320, the user equipment transmits an initial access message (msg 1) to initiate a random access procedure with the communication system. The user equipment selects a pre-configured access category indicating a priority of communication with the communication system and based on a criterion dependent on a network slice (slice 0, slice 1) at a step or module 1330.

As an example, the communication system may support numerous access categories *(e.g.,* 256). The access categories may be associated with an index *(e.g.,* eight bits). The user equipment may be configured to map certain network slices to certain access categories, or the user equipment may be preconfigured to select a network slice based on an access category *(e.g.,* slice 0 based on access category X). For instance, the mobility broadband network slices (slice 0) might use a different access category than the machine type communication network slices (slice 1).

In accordance with foregoing, the user equipment performs a barring check based on the pre-configured access category at a step or module 1340. The barring check may be based on the following. The communication system broadcasts certain access parameters (*e.g*., wait time, barring probability) that are associated with different access categories. When performing access, the user equipment will check the access category, for instance, according to which slice the data or signaling is associated with. The user equipment then checks if there is any access parameters broadcasted for this access category. If so, the user equipment draws a random float number (*e.g*., between 0 and 1) and if the number is lower than a barring probability, the user equipment will wait for the wait time before trying again. If the random number is higher than the barring probability, the user equipment will perform immediate access.

At a step or module 1350, the user equipment transmits an access message (msg 3) including the pre-configured access category in accordance with *(e.g.,* in conjunction with, during and/or following) the random access procedure with the communication system. The access message (msg 3) may include an information element indicating a generic access category for communication with the network slice (slice 0, slice 1) when the user equipment is attached to the communication system. The access message (msg 3) may indicate at least one of a preferred network slice, a cause value and a desired quality of service when the user equipment is attached to the communication system. At a step or module 1360, the user equipment transmits another access message (msg 5) including single network slice selection assistance information ("S-NSSAI") dependent on whether the user equipment is attached to the communication system and in response to a connection setup message. The user equipment will thereafter engage with the core network as described above (see, *e.g.,* FIGURES 10-12 and the related description). The method ends at an end step or module 1370.

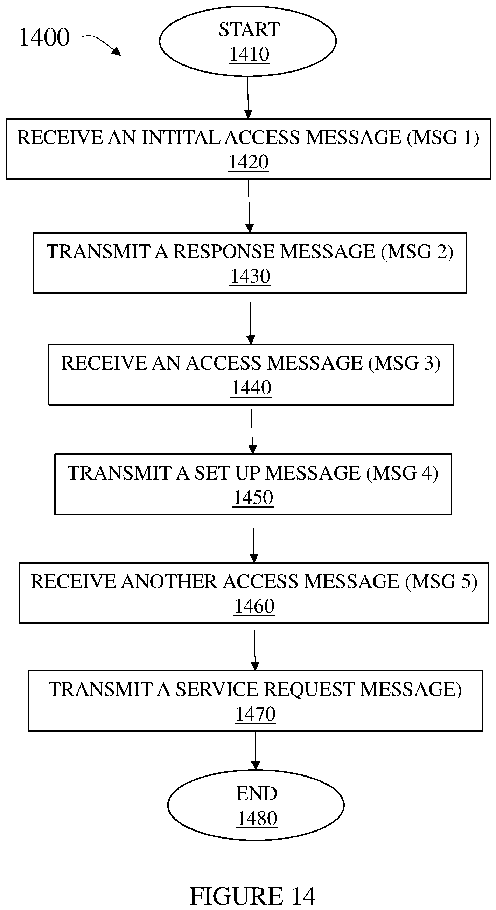

Turning now to FIGURE 14, illustrated is a flow diagram of an embodiment of a method 1400 of operating a communication system. The method is operable with a base station such as the base stations (120, 300, 920) in the communication systems (100, 900) of FIGUREs 1 and 9 employing network slicing employing network slicing. The method begins at a start step or module 1410. At a step or module 1420, the base station receives an initial access message (msg 1) to initiate a random access procedure with user equipment (such as user equipment 110, 200, 910, 920 of FIGUREs 1 and 9) in the communication system. The base station transmits a response message (msg 2) to the user equipment at a step or module 1430.

At a step or module 1440, the base station receives an access message (msg 3) in accordance with *(e.g.,* in conjunction with, during and/or following) the random access procedure with the user equipment in the communication system. The access message (msg 3) includes a pre-configured access category indicating a priority of communication with the communication system and based on a criterion dependent on a network slice (slice 0, slice 1). The access message (msg 3) may include an information element indicating a generic access category for communication with the network slice (slice 0, slice 1) when the user equipment is attached to the communication system. The access message (msg 3) may indicate at least one of a preferred network slice, a cause value and a desired quality of service when the user equipment is attached to the communication system.

In response thereto, the base station transmits a set up message (msg 4) to establish a connection with the user equipment in accordance with the pre-configured access category and the network slice (slice 0, slice 1) at a step or module 1450. The connection takes into account the priority of the communication with the user equipment. The set up message (msg 4) is a function of the pre-configured access category having a right to access to the communication system (such as based on congestion). At a step or module 1460, the base station receives another access message (msg 5) including a single network slice selection assistance information ("S-NSSAI") dependent on whether the user equipment is attached to the communication system.

The base station transmits a service request message (Initial UE message) to a core network instance (such as a core network instance 930, 950 of FIGURE 9) to route the user equipment thereto at a step or module 1470. The service request message (Initial UE message) may include a system architecture evolution-temporary mobile subscriber identity ("S-TMSI") of the user equipment when the user equipment is attached to the communication system. The service request message (Initial UE message) may be a non-access stratum ("NAS") service request. The user base station will thereafter engage with the core network and user equipment as described above (see, *e.g.,* FIGUREs 10-12 and the related description). The method ends at an end step or module 1480.

Thus, the system as described herein allows preferred initial priority treatment of the UE in the network as well as it enables other network functions, for instance, selection function, configuration function, *etc.* This is done with minimum overhead and high flexibility for future growth (*e.g*., possibility to add new slices and services).

As described above, the exemplary embodiments provide both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a processor. In particular, in the case of firmware or software, the exemplary embodiments can be provided as a computer program product including a computer readable storage medium embodying computer program code *(i.e.,* software or firmware) thereon for execution by the computer processor. The computer readable storage medium may be non-transitory (*e.g*., magnetic disks; optical disks; read only memory; flash memory devices; phase-change memory) or transitory (*e.g*., electrical, optical, acoustical or other forms of propagated signals-such as carrier waves, infrared signals, digital signals, *etc.).* The coupling of a processor and other components is typically through one or more busses or bridges (also termed bus controllers). The storage device and signals carrying digital traffic respectively represent one or more non-transitory or transitory computer readable storage medium. Thus, the storage device of a given electronic device typically stores code and/or data for execution on the set of one or more processors of that electronic device such as a controller.

Although the embodiments and its advantages have been described in detail, it should be understood that various changes, substitutions, and alterations can be made herein without departing from the scope of the invention as defined by the appended claims. For example, many of the features and functions discussed above can be implemented in software, hardware, or firmware, or a combination thereof. Also, many of the features, functions, and steps of operating the same may be reordered, omitted, added, *etc.,* and still fall within the broad scope of the various embodiments.

Moreover, the scope of the various embodiments is not intended to be limited to the particular embodiments of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized as well. Accordingly, the appended claims limit within their scope such processes, machines, manufacture, compositions of matter, means, methods, or steps.

## Claims

1. An apparatus associated with a user equipment (110, 200, 910, 920) in a communication system (100, 900) employing network slicing, comprising:
processing circuitry (210), configured to:
select a pre-configured access category indicating a priority of communication with said communication system (100, 900), said pre-configured access category based on a criterion dependent on a network slice;
perform a barring check based on said pre-configured access category; and
cause transmission of an access message in accordance with the barring check and a random access procedure with said communication system (100, 900).

2. The apparatus (110, 200, 910, 920) as recited in Claim 1, wherein said processing circuity (210) is further configured to cause transmission of the access message including said pre-configured access category in accordance with the random access procedure with said communication system (100, 900).

3. The apparatus (110, 200, 910, 920) as recited in Claim 1, wherein said access message comprises an information element indicating a generic access category for communication with said network slice when said apparatus (110, 200, 910, 920) is attached to said communication system (100, 900).

4. The apparatus (110, 200, 910, 920) as recited in Claim 1, wherein said access message indicates at least one of a preferred network slice, a cause value and a desired quality of service when said apparatus (110, 200, 910, 920) is attached to said communication system (100, 900).

5. The apparatus (110, 200, 910, 920) as recited in Claim 1, wherein said processing circuity (210) is further configured to cause transmission of an initial access message to initiate said random access procedure with said communication system (100, 900).

6. A method (1300) performed by a user equipment (110, 200, 910, 920) in a communication system (100, 900) employing network slicing, the method (1300) comprising:
selecting (1330) a pre-configured access category indicating a priority of communication with said communication system (100, 900), said pre-configured access category based on a criterion dependent on a network slice;
performing (1340) a barring check based on said pre-configured access category; and
transmitting (1350) an access message in accordance with the barring check and a random access procedure with said communication system (100, 900).

7. The method (1300) as recited in Claim 6, comprising transmitting the access message including said pre-configured access category in accordance with the random access procedure with said communication system (100, 900)

8. The method (1300) as recited in Claim 6, wherein said access message comprises an information element indicating a generic access category for communication with said network slice when said user equipment (110, 200, 910, 920) is attached to said communication system (100, 900).

9. The method (1300) as recited in Claim 6, wherein said access message indicates at least one of a preferred network slice, a cause value and a desired quality of service when said user equipment (110, 200, 910, 920) is attached to said communication system (100, 900).

10. The method (1300) as recited in Claim 6, further comprising transmitting (1320) an initial access message to initiate said random access procedure with said communication system (100, 900).

## Patentansprüche

1. Vorrichtung, die mit einer Benutzereinrichtung (110, 200, 910, 920) in einem Kommunikationssystem (100, 900), das Netzwerk-Slicing einsetzt, assoziiert ist und umfasst:
Verarbeitungsschaltungsanordnung (210), die konfiguriert ist zum:
Auswählen einer vorkonfigurierten Zugriffskategorie, die eine Priorität für Kommunikation mit dem Kommunikationssystem (100, 900) anzeigt, wobei die vorkonfigurierte Zugriffskategorie auf einem Kriterium basiert, das von einem Netzwerk-Slice abhängt;
Durchführen einer Zulässigkeitsprüfung basierend auf der vorkonfigurierten Zugriffskategorie; und
Veranlassen einer Übertragung einer Zugriffsnachricht gemäß der Zulässigkeitsprüfung und einer Direktzugriffsprozedur mit dem Kommunikationssystem (100, 900).

2. Vorrichtung (110, 200, 910, 920) nach Anspruch 1, wobei die Verarbeitungsschaltungsanordnung (210) ferner so konfiguriert ist, dass sie Übertragung der Zugriffsnachricht mit der vorkonfigurierten Zugriffskategorie gemäß der Direktzugriffsprozedur mit dem Kommunikationssystem (100, 900) veranlasst.

3. Vorrichtung (110, 200, 910, 920) nach Anspruch 1, wobei die Zugriffsnachricht ein Informationselement umfasst, das eine generische Zugriffskategorie zur Kommunikation mit dem Netzwerk-Slice anzeigt, wenn die Vorrichtung (110, 200, 910, 920) an das Kommunikationssystem (100, 900) angeschlossen ist.

4. Vorrichtung (110, 200, 910, 920) nach Anspruch 1, wobei die Zugriffsnachricht mindestens eines von einem bevorzugten Netzwerk-Slice, einem Ursachenwert und einer gewünschten Dienstqualität anzeigt, wenn die Vorrichtung (110, 200, 910, 920) an das Kommunikationssystem (100, 900) angeschlossen ist.

5. Vorrichtung (110, 200, 910, 920) nach Anspruch 1, wobei die Verarbeitungsschaltungsanordnung (210) ferner so konfiguriert ist, dass sie Übertragung einer Erstzugriffsnachricht zum Initiieren der Direktzugriffsprozedur mit dem Kommunikationssystem (100, 900) veranlasst.

6. Verfahren (1300), das von einer Benutzereinrichtung (110, 200, 910, 920) in einem drahtlosen Kommunikationssystem (100, 900) durchgeführt wird, das Netzwerk-Slicing einsetzt, wobei das Verfahren (1300) umfasst:
Auswählen (1330) einer vorkonfigurierten Zugriffskategorie, die eine Priorität für Kommunikation mit dem Kommunikationssystem (100, 900) anzeigt, wobei die vorkonfigurierte Zugriffskategorie auf einem Kriterium basiert, das von einem Netzwerk-Slice abhängt;
Durchführen (1340) einer Zulässigkeitsprüfung basierend auf der vorkonfigurierten Zugriffskategorie; und
Übertragen (1350) einer Zugriffsnachricht gemäß der Zulässigkeitsprüfung und einer Direktzugriffsprozedur mit dem Kommunikationssystem (100, 900).

7. Verfahren (1300) nach Anspruch 6, umfassend ein Übertragen der Zugriffsnachricht mit der vorkonfigurierten Zugriffskategorie gemäß der Direktzugriffsprozedur mit dem Kommunikationssystem (100, 900).

8. Verfahren (1300) nach Anspruch 6, wobei die Zugriffsnachricht ein Informationselement umfasst, das eine generische Zugriffskategorie zur Kommunikation mit dem Netzwerk-Slice anzeigt, wenn die Benutzereinrichtung (110, 200, 910, 920) an das Kommunikationssystem (100, 900) angeschlossen ist.

9. Verfahren (1300) nach Anspruch 6, wobei die Zugriffsnachricht mindestens eines von einem bevorzugten Netzwerk-Slice, einem Ursachenwert und einer gewünschtem Dienstqualität anzeigt, wenn die die Benutzereinrichtung (110, 200, 910, 920) an das Kommunikationssystem (100, 900) angeschlossen ist.

10. Verfahren (1300) nach Anspruch 6, ferner umfassend ein Übertragen (1320) einer Erstzugriffsnachricht zum Initiieren der Direktzugriffsprozedur mit dem Kommunikationssystem (100, 900).

## Revendications

1. Appareil associé à un équipement utilisateur (110, 200, 910, 920) dans un système de communication (100, 900) employant un découpage en tranches de réseau, comprenant une circuiterie de traitement (210) configurée pour :
sélectionner une catégorie d'accès préconfigurée indiquant une priorité de communication avec ledit système de communication (100, 900), ladite catégorie d'accès préconfigurée étant basée sur un critère dépendant d'une tranche de réseau ;
réaliser un contrôle d'admissibilité sur la base de ladite catégorie d'accès préconfigurée ; et
provoquer une transmission d'un message d'accès en fonction du contrôle d'admissibilité et d'une procédure d'accès aléatoire avec ledit système de communication (100, 900).

2. Appareil (110, 200, 910, 920) selon la revendication 1, dans lequel ladite circuiterie de traitement (210) est en outre configurée pour provoquer une transmission du message d'accès incluant ladite catégorie d'accès préconfigurée en fonction de la procédure d'accès aléatoire avec ledit système de communication (100, 900) .

3. Appareil (110, 200, 910, 920) selon la revendication 1, dans lequel ledit message d'accès comprend un élément d'information indiquant une catégorie d'accès générique pour une communication avec ladite tranche de réseau lorsque ledit appareil (110, 200, 910, 920) est rattaché audit système de communication (100, 900).

4. Appareil (110, 200, 910, 920) selon la revendication 1, dans lequel ledit message d'accès indique au moins l'une parmi une tranche de réseau préférée, une valeur de cause et une qualité souhaitée de service lorsque ledit appareil (110, 200, 910, 920) est rattaché audit système de communication (100, 900).

5. Appareil (110, 200, 910, 920) selon la revendication 1, dans lequel ladite circuiterie de traitement (210) est en outre configurée pour provoquer une transmission d'un message d'accès initial pour initier ladite procédure d'accès aléatoire avec ledit système de communication (100, 900).

6. Procédé (1300) réalisé par un équipement utilisateur (110, 200, 910, 920) dans un système de communication (100, 900) employant un découpage en tranches de réseau, le procédé (1300) comprenant :
la sélection (1330) d'une catégorie d'accès préconfigurée indiquant une priorité de communication avec ledit système de communication (100, 900), ladite catégorie d'accès préconfigurée étant basée sur un critère dépendant d'une tranche de réseau ;
la réalisation (1340) d'un contrôle d'admissibilité sur la base de ladite catégorie d'accès préconfigurée ; et
la transmission (1350) d'un message d'accès en fonction du contrôle d'admissibilité et d'une procédure d'accès aléatoire avec ledit système de communication (100, 900) .

7. Procédé (1300) selon la revendication 6, comprenant la transmission du message d'accès incluant ladite catégorie d'accès préconfigurée en fonction de la procédure d'accès aléatoire avec ledit système de communication (100, 900).

8. Procédé (1300) selon la revendication 6, dans lequel ledit message d'accès comprend un élément d'information indiquant une catégorie d'accès générique pour une communication avec ladite tranche de réseau lorsque ledit équipement utilisateur (110, 200, 910, 920) est rattaché audit système de communication (100, 900).

9. Procédé (1300) selon la revendication 6, dans lequel ledit message d'accès indique au moins l'une parmi une tranche de réseau préférée, une valeur de cause et une qualité souhaitée de service lorsque ledit équipement utilisateur (110, 200, 910, 920) est rattaché audit système de communication (100, 900).

10. Procédé (1300) selon la revendication 6, comprenant en outre la transmission (1320) d'un message d'accès initial pour initier ladite procédure d'accès aléatoire avec ledit système de communication (100, 900).
